# EUROPEAN PATENT APPLICATION

(11) **EP 4 834 684 A1**
(43) Date of publication of application: **04.11.2026**
(21) Application number: 24911557.7
(22) Date of filing: 27.12.2024
(51) Int. Cl.: B60W 10/08, B60W 20/00, B60K 6/365

(54) **VEHICLE MODE SWITCHING METHOD AND APPARATUS, SYSTEM, VEHICLE, COMPUTER PROGRAM, AND READABLE MEDIUM**

(30) Priority: 29.12.2023 CN 202311866415
(71) Applicant: Great Wall Motor Company Limited, Baoding, Hebei 071000 (CN)
(72) Inventor: ZHAO, Qing, Baoding, Hebei 071000 (CN); ZHENG, Yunlong, Baoding, Hebei 071000 (CN); CHANG, Xiao, Baoding, Hebei 071000 (CN); CHEN, Shujiang, Baoding, Hebei 071000 (CN)
(74) Representative: Michalski Hüttermann & Partner mbB
(86) International application number: PCT/CN2024/143422
(87) International publication number: WO 2025/140641

(57) **Abstract**

Provided are a vehicle mode switching method and apparatus (300), a system (400), a vehicle (500), a computer program, and a readable medium. When the vehicle (500) is in a direct drive mode, by identifying working condition information of the vehicle (500), it can be accurately determined whether the vehicle (500) meets a mode switching condition for switching from the direct drive mode to a power split mode (S201), and when it is determined that the vehicle (500) meets the mode switching condition, a clutch (102) is kept in an engaged state, and torque adjustment is performed on an engine (101) and a first motor (103) (S202), such that when a first synchronizer (105) meets a gear switching condition, the first synchronizer (105) can be controlled to switch from a coupling gear to a power split gear (S203). That is, the gear shifting operation of the first synchronizer (105) can be completed without engaging or disengaging the clutch (102), thereby shortening the mode switching duration, and improving the dynamic response performance of the vehicle (500) in the mode switching process.

## Description

### CROSS-REFERENCE TO RELATED APPLICATIONS

The present application claims priority to Chinese Patent Application No. 202311866415.2, filed with the China National Intellectual Property Administration on December 29, 2023, and entitled "VEHICLE MODE SWITCHING METHOD, DEVICE, SYSTEM, AND VEHICLE", the entire contents of which are incorporated herein by reference.

### TECHNICAL FIELD

The present application relates to the field of vehicle control technologies, and in particular, to a vehicle mode switching method, apparatus, system, a vehicle, a computer program, and a computer-readable medium.

### BACKGROUND

With rapid development of automotive industry, in response to national policies on energy saving, emission reduction, and carbon balance, conventional fuel vehicles are gradually transitioning towards hybrid vehicles. To adapt to different road conditions and driving demands, hybrid vehicles are typically provided with a plurality of driving modes including a direct drive mode and a power split mode. During vehicle operation, the driving modes may switch from one to another under certain conditions.

In the related art, during switching of the vehicle from the direct drive mode to the power split mode, it is usually necessary to first open the clutch, then perform torque reduction on the engine, and after the torque reduction is completed, re-engage the clutch to complete the mode switching. However, this approach involves a processes of opening and closing the clutch, thus suffering from a problem of a long mode switching time and an untimely engine power response, which in turn affects power response performance of the vehicle during mode switching.

### SUMMARY

The embodiments of the present application disclose following technical solutions.

In a first aspect, the embodiments of the present application provide a vehicle mode switching method, a vehicle includes an engine, a clutch, a first electric machine, and a transmission; the transmission includes a power split mechanism, a first synchronizer, and a transmission input shaft; the engine is connected to a first input end of the power split mechanism via the clutch; the first electric machine is connected to a second input end of the power split mechanism; an output end of the power split mechanism is connected to the transmission input shaft; the first synchronizer is disposed between the first input end and the output end; and the method includes:
when the vehicle is in a direct drive mode, determining, based on operating condition information of the vehicle, whether the vehicle satisfies a mode switching condition for switching from the direct drive mode to a power split mode;
when the vehicle is determined to satisfy the mode switching condition, maintaining the clutch in an engaged state, and performing torque adjustment on the engine and the first electric machine, so that the first synchronizer satisfies a gear shift condition; and
when the first synchronizer satisfies the gear shift condition, controlling the first synchronizer to shift from an engaged gear to a power split gear, so that the vehicle switches from the direct drive mode to the power split mode.

In some embodiments of the present application, the operating condition information includes road condition information and a current state of charge of a traction battery;
the step of determining, based on the operating condition information of the vehicle, whether the vehicle satisfies the mode switching condition for switching from the direct drive mode to the power split mode includes:
when the current state of charge is less than a charge threshold, determining, based on the road condition information, a current road condition in which the vehicle is located; and
when the current road condition is a preset road condition, determining that the vehicle satisfies the mode switching condition for switching from the direct drive mode to the power split mode.

In some embodiments of the present application, the step of performing torque adjustment on the engine and the first electric machine includes:
when a current electric machine torque of the first electric machine is a negative torque, keeping the current electric machine torque unchanged, and performing torque adjustment on the engine based on the current electric machine torque; and
when the current electric machine torque of the first electric machine is a positive torque, controlling a current engine torque of the engine and the current electric machine torque of the first electric machine to follow a preset target torque.

In some embodiments of the present application, the power split mechanism includes a ring gear, a sun gear, a plurality of planet gears meshed with the ring gear and the sun gear, and a planet carrier rotatably connected to the plurality of planet gears; the planet carrier serves as the first input end connected to the engine; the sun gear serves as the second input end connected to the first electric machine; the ring gear serves as the output end connected to the transmission input shaft; the first synchronizer is disposed between the planet carrier and the ring gear; and
the step of performing torque adjustment on the engine based on the current electric machine torque includes:
when a current gear of the first synchronizer is the engaged gear, determining a gear ratio between the sun gear and the planet carrier as a first gear ratio;
determining a target engine torque of the engine based on the current electric machine torque of the first electric machine and the first gear ratio; and
controlling, based on a preset torque adjustment gradient, the current engine torque of the engine to gradually decrease to the target engine torque.

In some embodiments of the present application, the step of controlling the current engine torque of the engine and the current electric machine torque of the first electric machine to follow the preset target torque includes:
controlling, based on a preset torque adjustment gradient, the current engine torque of the engine and the current electric machine torque of the first electric machine to gradually decrease to the target torque.

In some embodiments of the present application, the vehicle further includes a second electric machine, and the method further including:
determining a compensation torque of the second electric machine based on the current engine torque and the current electric machine torque;
determining a target drive torque of the second electric machine based on the compensation torque and a current drive torque of the second electric machine; and
during the torque adjustment on the engine and the first electric machine, controlling, based on a preset torque adjustment gradient, the current drive torque of the second electric machine to gradually increase to the target drive torque.

In some embodiments of the present application, after the step of performing torque adjustment on the engine based on the current electric machine torque, the method further includes:
when a first torque difference between the current engine torque of the engine and the target engine torque is less than a first torque threshold, starting to count a first duration during which the first torque difference remains less than the first torque threshold; and
when the first duration is greater than a first time threshold, determining that the first synchronizer satisfies the gear shift condition.

In some embodiments of the present application, after the step of controlling the current engine torque of the engine and the current electric machine torque of the first electric machine to follow the preset target torque, the method further includes:
when a second torque difference between the current engine torque of the engine and the target torque is less than a second torque threshold, starting to count a second duration during which the second torque difference remains less than the second torque threshold;
when a third torque difference between the current electric machine torque of the first electric machine and the target torque is less than a third torque threshold, starting to count a third duration during which the third torque difference remains less than the third torque threshold; and
when the second duration is greater than a second time threshold and the third duration is greater than a third time threshold, determining that the first synchronizer satisfies the gear shift condition.

In a second aspect, an embodiment of the present application provides a vehicle mode switching apparatus, wherein the vehicle includes an engine, a clutch, a first electric machine, and a transmission; the transmission includes a power split mechanism, a first synchronizer, and a transmission input shaft; the engine is connected to a first input end of the power split mechanism via the clutch; the first electric machine is connected to a second input end of the power split mechanism; an output end of the power split mechanism is connected to the transmission input shaft; the first synchronizer is disposed between the first input end and the output end; and the apparatus includes:
a condition determination module, configured to, when the vehicle is in a direct drive mode, determine, based on operating condition information of the vehicle, whether the vehicle satisfies a mode switching condition for switching from the direct drive mode to a power split mode;
a torque adjustment module, configured to, when the vehicle is determined to satisfy the mode switching condition, maintain the clutch in an engaged state, and perform torque adjustment on the engine and the first electric machine, so that the first synchronizer satisfies a gear shift condition; and
a gear shift module, configured to, when the first synchronizer satisfies the gear shift condition, control the first synchronizer to shift from an engaged gear to a power split gear, so that the vehicle switches from the direct drive mode to the power split mode.

In some embodiments of the present application, the operating condition information includes road condition information and a current state of charge of a traction battery; and the condition determination module includes:
a road condition determination submodule, configured to, when the current state of charge is less than a charge threshold, determine, based on the road condition information, a current road condition in which the vehicle is located; and
a condition determination submodule, configured to, when the current road condition is a preset road condition, determine that the vehicle satisfies the mode switching condition for switching from the direct drive mode to the power split mode.

In some embodiments of the present application, the torque adjustment module includes:
a first torque adjustment submodule, configured to, when a current electric machine torque of the first electric machine is a negative torque, keep the current electric machine torque unchanged, and perform torque adjustment on the engine based on the current electric machine torque;
a second torque adjustment submodule, configured to, when the current electric machine torque of the first electric machine is a positive torque, control a current engine torque of the engine and the current electric machine torque of the first electric machine to follow a preset target torque.

In some embodiments of the present application, the power split mechanism includes a ring gear, a sun gear, a plurality of planet gears meshed with the ring gear and the sun gear, and a planet carrier rotatably connected to the plurality of planet gears; the planet carrier serves as the first input end connected to the engine; the sun gear serves as the second input end connected to the first electric machine; the ring gear serves as the output end connected to the transmission input shaft; the first synchronizer is disposed between the planet carrier and the ring gear; and the first torque adjustment submodule includes:
a gear ratio determination unit, configured to, when a current gear of the first synchronizer is the engaged gear, determine a gear ratio between the sun gear and the planet carrier as a first gear ratio;
an engine torque determination unit, configured to determine a target engine torque of the engine based on the current electric machine torque of the first electric machine and the first gear ratio; and
a first torque adjustment unit, configured to control, based on a preset torque adjustment gradient, the current engine torque of the engine to gradually decrease to the target engine torque.

In some embodiments of the present application, the second torque adjustment submodule includes:
a second torque adjustment unit, configured to control, based on a preset torque adjustment gradient, the current engine torque of the engine and the current electric machine torque of the first electric machine to gradually decrease to the target torque.

In some embodiments of the present application, the vehicle further includes a second electric machine, and the vehicle mode switching apparatus further includes:
a compensation torque determination module, configured to determine a compensation torque of the second electric machine based on the current engine torque and the current electric machine torque;
a drive torque determination module, configured to determine a target drive torque of the second electric machine based on the compensation torque and a current drive torque of the second electric machine; and
a drive torque control module, configured to, during the torque adjustment on the engine and the first electric machine, control, based on a preset torque adjustment gradient, the current drive torque the second electric machine to gradually increase to the target drive torque.

In some embodiments of the present application, the vehicle mode switching apparatus further includes:
a first timing module, configured to, when a first torque difference between the current engine torque of the engine and the target engine torque is less than a first torque threshold, start to count a first duration during which the first torque difference remains less than the first torque threshold; and
a first shift condition determination module, configured to, when the first duration is greater than a first time threshold, determine that the first synchronizer satisfies the gear shift condition.

In some embodiments of the present application, the vehicle mode switching apparatus further includes:
a second timing module, configured to, when a second torque difference between the current engine torque of the engine and the target torque is less than a second torque threshold, start to count a second duration during which the second torque difference remains less than the second torque threshold;
a third timing module, configured to, when a third torque difference between the current electric machine torque of the first electric machine and the target torque is less than a third torque threshold, start to count a third duration during which the third torque difference remains less than the third torque threshold; and
a second shift condition determination module, configured to, when the second duration is greater than a second time threshold and the third duration is greater than a third time threshold, determine that the first synchronizer satisfies the gear shift condition.

In a third aspect, an embodiment of the present application provides a vehicle mode switching system, wherein the vehicle includes an engine, a clutch, a first electric machine, and a transmission; the transmission includes a power split mechanism, a first synchronizer, and a transmission input shaft; the engine is connected to a first input end of the power split mechanism via the clutch; the first electric machine is connected to a second input end of the power split mechanism; an output end of the power split mechanism is connected to the transmission input shaft; the first synchronizer is disposed between the first input end and the output end; and the system includes a vehicle controller, a transmission controller, an electric machine controller, and an engine controller; wherein
the vehicle controller is configured to, when the vehicle is in a direct drive mode, determine, based on operating condition information of the vehicle, whether the vehicle satisfies a mode switching condition for switching from the direct drive mode to a power split mode, and when the vehicle is determined to satisfy the mode switching condition, send a clutch state maintaining request to the transmission controller, send an engine torque adjustment request to the engine controller, and send an electric machine torque adjustment request to the electric machine controller;
the transmission controller is configured to, in response to the clutch state maintaining request, maintain the clutch in an engaged state;
the engine controller is configured to, in response to the engine torque adjustment request, perform torque adjustment on the engine, and the electric machine controller is configured to, in response to the electric machine torque adjustment request, perform torque adjustment on the first electric machine, so that the first synchronizer satisfies a gear shift condition;
the vehicle controller is further configured to, when the first synchronizer satisfies the gear shift condition, send a gear shift request to the transmission controller; and
the transmission controller is further configured to, in response to the gear shift request, control the first synchronizer to shift from an engaged gear to a power split gear, so that the vehicle switches from the direct drive mode to the power split mode.

In a fourth aspect, an embodiment of the present application provides a vehicle, including the vehicle mode switching system according to the third aspect.

In a fifth aspect, an embodiment of the present application provides a computer program, including computer-readable code, wherein when the computer-readable code is executed on a computing processing device, the computing processing device is caused to perform the vehicle mode switching method according to any one of the first aspect.

In a sixth aspect, an embodiment of the present application provides a computer-readable medium, storing the computer program according to the fifth aspect.

Compared with the conventional art, the present application includes the following advantages.

According to the vehicle mode switching method provided by the embodiment of the present application, when the vehicle is in a direct drive mode, based on operating condition information of the vehicle, whether the vehicle satisfies a mode switching condition for switching from the direct drive mode to a power split mode is determined. When the vehicle is determined to satisfy the mode switching condition, the clutch can be maintained in an engaged state, torque adjustment is performed on the engine and the first electric machine, so that when the first synchronizer satisfies a gear shift condition, the first synchronizer can be controlled to shift from an engaged gear to a power split gear, thereby switching the vehicle from the direct drive mode to the power split mode. According to the embodiment of the present application, by means of identifying the operating condition information of the vehicle, the vehicle can be controlled to automatically switch from the direct drive mode to the power split mode. Meanwhile, by means of performing torque adjustment on the engine and the first electric machine, the gear shifting operation of the first synchronizer can be successfully completed without opening or closing the clutch. In this way, the vehicle can switch from the direct drive mode to the power split mode more quickly and smoothly. Mode switching duration is effectively shortened, and a charging demand of a traction battery is met at the same time, enabling the engine to output torque quickly, and thus effectively improving the power response performance of the vehicle during mode switching.

The above description is only an overview of the technical solution of the present application. For a better understanding of the technical means of the present application, the detailed description may be implemented in accordance with the content of the specification. Moreover, to make the above and other objects, features, and advantages of the present application more comprehensible, specific embodiments of the present application are set forth below.

### BRIEF DESCRIPTION OF THE DRAWINGS

To more clearly describe the technical solutions in the embodiments of the present application or in the conventional art, the drawings required for the description of the embodiments or the conventional art are briefly introduced below. Apparently, the drawings in the following description are only some embodiments of the present application. For a person of ordinary skill in the art, other drawings can be obtained based on these drawings without creative efforts.
FIG. 1 is a schematic structural diagram of a hybrid vehicle according to an embodiment of the present application.
FIG. 2 is a flow chart of a vehicle mode switching method according to an embodiment of the present application.
FIG. 3 is a functional module schematic diagram of a vehicle mode switching apparatus according to an embodiment of the present application.
FIG. 4 is a schematic structural diagram of a vehicle mode switching system according to an embodiment of the present application.
FIG. 5 is a schematic structural diagram of a vehicle according to an embodiment of the present application.
FIG. 6 is a block diagram schematically illustrating a computing processing device for executing the method according to the present application.
FIG. 7 is a storage unit schematically illustrating a storage unit for holding or carrying program code for implementing the method according to the present application.

### DETAILED DESCRIPTIONS OF THE EMBODIMENTS

To make the objectives, technical solutions, and advantages of the embodiments of the present application clearer, the technical solutions in the embodiments of the present application are described clearly and completely below with reference to the accompanying drawings in the embodiments of the present application. Obviously, the described embodiments are part of the embodiments of the present application, not all of the embodiments. Based on the embodiments in the present application, all other embodiments obtained by a person of ordinary skill in the art without creative efforts fall within the protection scope of the present application.

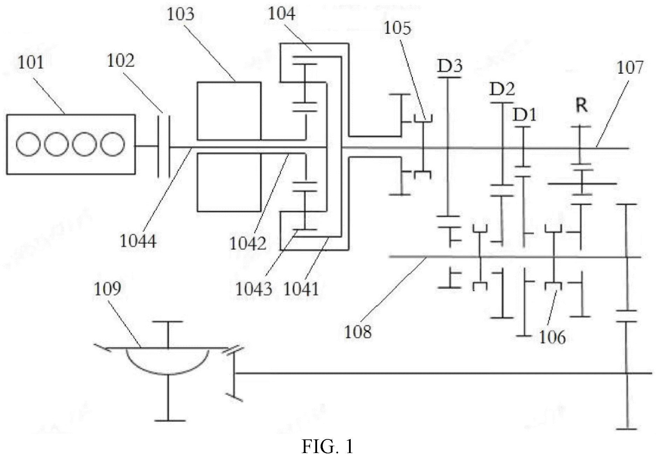

Referring to FIG. 1, a schematic structural diagram of a hybrid vehicle according to an embodiment of the present application is shown. The hybrid vehicle is provided, at a front axle thereof, with an engine 101, a clutch 102, a first electric machine 103, and a transmission. The transmission includes a power split mechanism 104, a transmission input shaft 107, a transmission output shaft 108, a first synchronizer 105, and a second synchronizer 106. The engine 101 is connected to a first input end of the power split mechanism 104 via the clutch 102. The first electric machine 103 is connected to a second input end of the power split mechanism 104. An output end of the power split mechanism 104 is connected to the transmission input shaft 107.

The first synchronizer 105 is disposed between the first input end and the output end, and configured to engage or disengage the first input end and the output end. Specifically, when the first synchronizer 105 is in an engaged gear, the first synchronizer 105 is configured to engage the first input end and the output end. When the first synchronizer 105 is in a power split gear, the first synchronizer 105 is configured to disengage the first input end and the output end. It should be noted that the first synchronizer 105 is configured to control the vehicle to switch between a power split mode and other modes. That is, when the first synchronizer 105 is in the power split gear, the vehicle can be in the power split mode. When the first synchronizer 105 is in the engaged gear, the vehicle can be in other modes other than the power split mode, for example, a direct drive mode, a series mode, a pure electric four-wheel drive mode, or the like.

The second synchronizer 106 is disposed between the transmission input shaft 107 and the transmission output shaft 108, configured to engage or disengage the transmission input shaft 107 and the transmission output shaft 108. Specifically, when the second synchronizer 106 is in a gear engaged state, the second synchronizer 106 is configured to engage the transmission input shaft 107 and the transmission output shaft 108. When the second synchronizer 106 is in a neutral state, the second synchronizer 106 is configured to disengage the transmission input shaft 107 and the transmission output shaft 108.

Further, the transmission output shaft 108 is further connected to a front axle wheel via a front axle differential 109, configured to transmit power to the front axle wheel via the front axle differential 109, so as to drive the front axle of the vehicle. The hybrid vehicle is further provided, at a rear axle thereof, with a second electric machine (not shown in the figures). The second electric machine is configured to transmit power to a rear axle wheel via a rear axle differential (not shown in the figures) to drive the rear axle of vehicle.

Since the hybrid vehicle adopting the above architecture is provided with the power split mechanism 104, and the power split mechanism 104 is connected to the engine 101, the first electric machine 103, and the transmission input shaft 107, so that the hybrid vehicle can have a plurality of driving modes including the direct drive mode, the power split mode, and the like. Then, by changing a gear state of the first synchronizer 105, switching between different driving modes of the vehicle can be achieved.

In the power split mode, the first synchronizer 105 is in the power split gear. At this time, the first synchronizer 105 is in a disengaged state, disengaging the first input end and the output end. The second synchronizer 106 is in a gear engaged state. The engine 101 is in a driving state. The clutch 102 is in an engaged state. The first electric machine 103 is in a power generating state. The second electric machine is in a driving state. At this time, a driving force output by the engine 101 is transmitted to the power split mechanism 104 via the clutch 102 and the first input end. The power split mechanism 104 transmits a part of the driving force to the first electric machine 103 via the second input end, so as to drive the first electric machine 103 to generate power (at this time, the first electric machine 103 outputs a negative torque), and the generated electric energy is supplied to charge a traction battery. The power split mechanism 104 transmits another part of the driving force to the transmission input shaft 107 via the output end, and this part of the driving force is transmitted from the transmission input shaft 107 to the front axle of the vehicle sequentially through the second synchronizer 106, the transmission output shaft 108, and the front axle differential 109, so as to drive the vehicle. A distribution ratio of the driving force can be set according to an actual need. That is, in the power split mode, a part of the output power of the engine 101 is used to drive the first electric machine 103 to charge the traction battery, and another part of the output power is used to directly drive the vehicle.

In the direct drive mode, the first synchronizer 105 is in the engaged gear. The second synchronizer 106 is in a gear engaged state. The engine 101 is in a driving state. The clutch 102 is in an engaged state. The first electric machine 103 is typically in a driving state. And the second electric machine is in a driving state. At this time, a driving force output by the engine 101 is transmitted to the transmission input shaft 107 sequentially through the first input end of the power split mechanism, the first synchronizer 105, and the output end. While a driving force output by the first electric machine 103 is transmitted to the transmission input shaft 107 through the second input end of the power split mechanism and the output end. And the driving force output by the engine 101 and the driving force output by the first electric machine 103 are transmitted from the transmission input shaft 107 to the front axle of the vehicle sequentially through the second synchronizer 106, the transmission output shaft 108, and the front axle differential 109, so as to drive the vehicle. Since in the direct drive mode, the engine 101 and the first electric machine 103 can jointly drive the front axle of the vehicle, the overall driving force of the vehicle in the direct drive mode is generally greater than the overall driving force of the vehicle in the power split mode.

It can be seen that when the vehicle switches from the direct drive mode to the power split mode, it is necessary to shift the first synchronizer 105 from the engaged gear to the power split gear.

In the related art, during a process of switching the vehicle from the direct drive mode to the power split mode, it is usually necessary to first open the clutch 102, then perform torque reduction on the engine 101, and after the torque reduction is completed, re-engage the clutch 102 to complete the mode switching. However, this approach requires additional control for opening or closing the clutch 102 during mode switching. On one hand, a longer switching link and a longer mode switching time are caused. On the other hand, the engine 101 needs to wait for the clutch 102 to be re-engaged before outputting torque, resulting in an untimely power response of the engine 101, thereby affecting the overall vehicle power response performance during mode switching.

Aiming at a problem of poor overall vehicle power response performance existing in a current hybrid vehicle when the vehicle switches from the direct drive mode to the power split mode, the present application aims to provide a vehicle mode switching method. By identifying operating condition information of the vehicle, the vehicle can be controlled to automatically switch from the direct drive mode to the power split mode. Meanwhile, by performing torque adjustment on the engine 101 and the first electric machine 103, a gear shifting operation of the first synchronizer 105 can be successfully completed without opening or closing the clutch 102. In this way, the vehicle can switch from the direct drive mode to the power split mode more quickly and smoothly, effectively shortening the mode switching duration while a charging demand of the traction battery is met, enabling the engine 101 to output torque quickly, and thus effectively improving power response performance of the vehicle during mode switching.

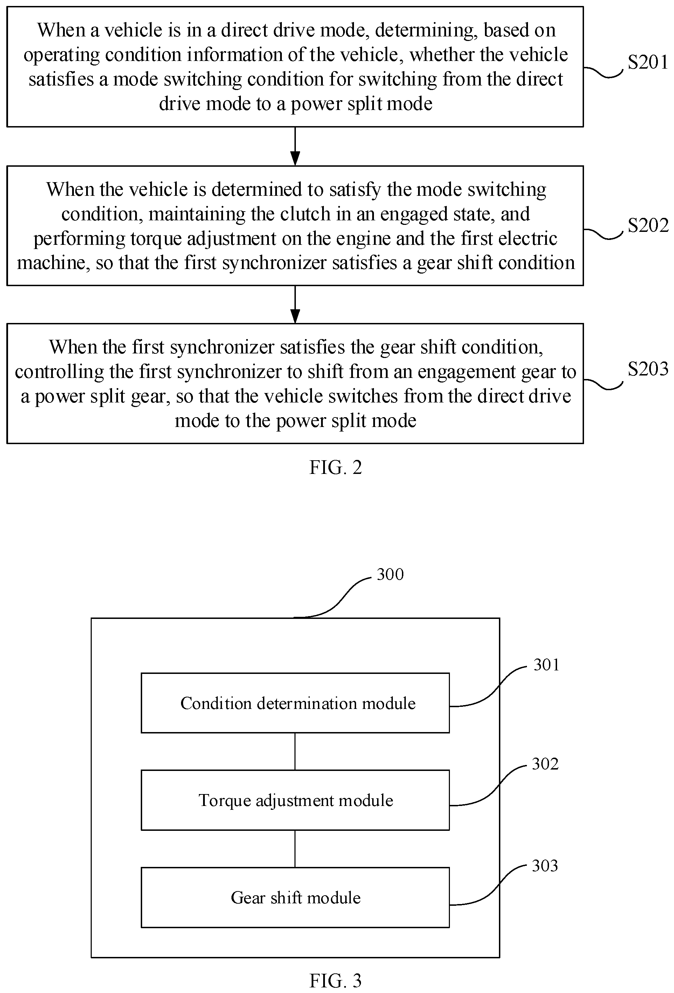

Referring to FIG. 2, a vehicle mode switching method according to the present application is shown, applied to a hybrid vehicle adopting the above architecture. The method may include the following steps.

S201: when a vehicle is in a direct drive mode, determining, based on operating condition information of the vehicle, whether the vehicle satisfies a mode switching condition for switching from a direct drive mode to a power split mode.

It should be noted that an execution subject of the embodiment may be a computing service device having data processing, network communication, and program running functions, or an electronic device having the above functions, such as a trip computer, an onboard computer. For example, the execution subject of the embodiment may be an electronic control unit (ECU), a body control module (BCM), an hybrid control unit (HCU), and the like. This embodiment is described using an HCU as the execution subject. However, the present embodiment does not impose specific limitations on the execution subject of the vehicle.

In the embodiment, when the vehicle is in the direct drive mode, the HCU can acquire operating condition information of the vehicle in real time, and then based on the operating condition information, determine whether the vehicle needs to switch from the direct drive mode to the power split mode.

In specific implementation, the operating condition information may include road condition information and a current Sta e of charge (SOC) of a traction battery. The HCU can first determine, based on the current SOC, whether the traction battery is in a low charge state. If the current SOC is determined to be less than a charge threshold, the current SOC of the traction battery is determined to be insufficient to support the vehicle operating in the direct drive mode. At this time, the vehicle can switch to a series mode or to the power split mode, so as to meet a charging demand of the traction battery. To make the mode switching more accurate, the HCU can further combine the road condition information to determine whether the vehicle needs to switch from the direct drive mode to the power split mode. If, based on the road condition information, the current road condition in which the vehicle is located is determined to be a preset road condition, then the vehicle is determined to satisfy the mode switching condition for switching from the direct drive mode to the power split mode.

In the embodiment, the road condition information may specifically include a road perception result from a perception system and driving state information including current vehicle speed, current acceleration, and the like. Then, by analyzing the perception result and the driving state information, the HCU can identify the current road condition in which the vehicle is located.

It should be noted that the preset road condition indicates a road condition that the vehicle is in a four-wheel drive mode, such as a desert road condition, a muddy road condition, a snow road condition, and the like. Since a driving mode of the vehicle in the power split mode is a four-wheel drive mode, the power split mode can better adapt to the preset road condition compared to a series mode. The charge threshold represents a charging balance point of the traction battery. For example, the charge threshold can be set to 20%, that is, when the current SOC of the traction battery is less than 20%, the traction battery is indicated to have a charging demand.

In the embodiment, by analyzing the operating condition information, the vehicle can be controlled to automatically switch from the direct drive mode to the power split mode, meeting the charging demand of the traction battery while effectively satisfying a driving demand of a driver under the preset road condition, thereby achieving intelligent switching of vehicle modes.

S202: when the vehicle is determined to satisfy the mode switching condition, maintaining the clutch 102 in an engaged state, and performing torque adjustment on the engine 101 and the first electric machine 103, so that the first synchronizer 105 satisfies a gear shift condition.

In the embodiment, after the vehicle is determined to satisfy the mode switching condition for switching from the direct drive mode to the power split mode, the HCU can send a clutch state maintaining request to a transmission controller, so that the transmission controller, in response to the clutch state maintaining request, maintains the clutch 102 in an engaged state. At the same time, the HCU sends an engine torque adjustment request to an engine controller, so that the engine controller, in response to the engine torque adjustment request, performs torque adjustment on the engine 101. At the same time, the HCU sends an electric machine torque adjustment request to an electric machine controller, so that the electric machine controller, in response to the electric machine torque adjustment request, performs torque adjustment on the first electric machine 103.

It should be noted that when the vehicle switches from the direct drive mode to the power split mode, the first synchronizer 105 needs to be disengaged from the engaged gear to the power split gear. If a torque applied to the first synchronizer 105 is too large when the first synchronizer 105 is being disengaged, the first synchronizer 105 may be caused to be unable to disengage smoothly or become damaged during disengagement.

In the embodiment, to prevent the first synchronizer 105 from being unable to disengage smoothly, torque adjustment is performed on the engine 101 and the first electric machine 103 so that the torque jointly applied to the first synchronizer 105 by the engine 101 and the first electric machine 103 through the power split mechanism 104 is a small value. The small value is preferably zero. In this way, without opening the clutch 102, the torque at the first synchronizer 105 can be reduced to a value required for disengagement, thereby enabling the first synchronizer 105 to satisfy the gear shift condition.

S203: when the first synchronizer 105 satisfies the gear shift condition, controlling the first synchronizer 105 to shift from an engaged gear to a power split gear, so that the vehicle switches from the direct drive mode to the power split mode.

In the embodiment, after the first synchronizer 105 is detected to satisfy the gear shift condition, the HCU can send a gear shift request indicating that a target gear is the power split gear to the transmission controller, so that the transmission controller, in response to the gear shift request, controls the first synchronizer 105 to shift from the engaged gear to the power split gear.

In the embodiment, by performing torque adjustment on the engine 101 and the first electric machine 103, the first synchronizer 105 can perform a gear shifting operation when the gear shift condition is satisfied, thereby effectively ensuring safety of gear shifting of the first synchronizer 105.

In this embodiment, after the first synchronizer 105 is determined to have shifted to the power split gear, the HCU can set a current driving mode of the vehicle from the direct drive mode to the power split mode, and then control the engine 101, the first electric machine 103, and the second electric machine to output torque according to a torque distribution strategy under the power split mode.

Specifically, the torque distribution strategy includes a front axle torque distribution strategy and a rear axle torque output strategy. The HCU is configured to execute the front axle torque distribution strategy, controlling the engine 101 to output a first torque with a positive value, and controlling the first electric machine 103 to output a second torque with a negative value, so as to drive the front axle of the vehicle while the traction battery is charged. At the same time, the HCU is further configured to execute the rear axle torque output strategy, controlling the second electric machine to output a third torque with a positive value, so as to drive the rear axle of the vehicle.

It should be noted that the first torque is greater than the absolute value of the second torque. Thus, the first torque transmitted by the engine 101 to the power split mechanism 104 can be divided by the power split mechanism 104 into a power generation sub-torque and a driving sub-torque. The power generation sub-torque is equal to the absolute value of the second torque, and is configured to be transmitted to the first electric machine 103 via the power split mechanism 104, so as to drive the first electric machine 103 to generate power. The generated electric energy is supplied to charge the traction battery. The driving sub-torque is the difference between the first torque and the absolute value of the second torque, and is configured to be transmitted to the transmission input shaft 107 via the power split mechanism 104, and then transmitted from the transmission input shaft 107 to the front axle of the vehicle sequentially through the second synchronizer 106, the transmission output shaft 108, and the front axle differential 109, so as to drive the vehicle.

According to the vehicle mode switching method provided by the embodiment of the present application, torque adjustment is performed on the engine 101 and the first electric machine 103, so that a gear shifting operation of the first synchronizer 105 can be successfully completed without opening or closing the clutch 102 during a vehicle mode switching process. In this way, the vehicle can switch from the direct drive mode to the power split mode more quickly and smoothly, effectively shortening the mode switching duration while the engine 101 can output torque quickly, thereby improving power response performance of the vehicle during mode switching.

In a feasible implementation, the step of performing torque adjustment on the engine 101 and the first electric machine 103 in S202 may specifically include the following sub-steps.

S202-1: when a current electric machine torque of the first electric machine 103 is a negative torque, keeping the current electric machine torque unchanged, and performing torque adjustment on the engine 101 based on the current electric machine torque.

It should be noted that in the direct drive mode, the first electric machine 103 may appear in the following two operating states: a power generating state and a driving state.

In the power generating state, the current electric machine torque of the first electric machine 103 is a negative torque. At this time, the first electric machine 103 is generally configured to adjust an operating point of the engine 101, so that the engine 101 can operate in an optimal economic range.

In the driving state, the current electric machine torque of the first electric machine 103 is a positive torque. At this time, a driver has a large power demand, requiring the engine 101 and the first electric machine 103 to jointly drive the vehicle.

In the embodiment, for the two possible operating states of the first electric machine 103, corresponding torque adjustment strategies are matched.

Specifically, when the vehicle is determined to satisfy the mode switching condition, if the HCU detects that the current electric machine torque of the first electric machine 103 is a negative torque, the current electric machine torque can be kept unchanged, that is, the first electric machine 103 is kept charging the traction battery, and torque adjustment is performed on the engine 101 based on the current electric machine torque.

In the embodiment, considering that when the clutch 102 is engaged, the torque of the engine 101 and the torque of the first electric machine 103 can be simultaneously applied to the power split mechanism 104, therefore, by performing torque adjustment on the current engine torque of the engine 101, the torque applied by the engine 101 to the power split mechanism 104 can be used to counteract the negative torque applied by the first electric machine 103 to the power split mechanism 104, thereby adjusting the torque applied by the power split mechanism 104 to the first synchronizer 105. In this way, without opening the clutch 102 and maintaining the first electric machine 103 generating power at the same time, the torque at the first synchronizer 105 can be balanced to a value required for disengagement, so that the first synchronizer 105 satisfies the gear shift condition.

S202-2: when the current electric machine torque of the first electric machine 103 is a positive torque, controlling a current engine torque of the engine 101 and the current electric machine torque of the first electric machine 103 to follow a preset target torque.

In the embodiment, when the vehicle is determined to satisfy the mode switching condition, if the HCU detects that the current electric machine torque of the first electric machine 103 is a positive torque, since the engine 101 cannot counteract the torque of the first electric machine 103 at this time, the HCU can simultaneously perform torque adjustment on the engine 101 and the first electric machine 103 according to the target torque, so as to reduce the torque jointly applied to the first synchronizer 105 by the engine 101 and the first electric machine 103 to a value required for disengagement, thereby enabling the first synchronizer 105 to satisfy the gear shift condition.

In the embodiment, for a case where the current electric machine torque of the first electric machine 103 is a positive torque, by simultaneously controlling the engine 101 and the first electric machine 103 to reduce the torque to the target torque, the safety of the gear shifting of the first synchronizer 105 can be effectively ensured. For a case where the current electric machine torque of the first electric machine 103 is a negative torque, by keeping the first electric machine 103 in the power generating state, on the one hand, the charging demand of the traction battery can be continuously met; on the other hand, the gear shifting operation of the first synchronizer 105 can be achieved by performing torque adjustment only on the engine 101, thereby further improving a gear shifting speed while the safety of the gear shifting is ensured.

Exemplarily, continuing to refer to FIG. 1, the power split mechanism 104 may specifically include a ring gear 1041, a sun gear 1042, a plurality of planet gears 1043 meshed with the ring gear 1041 and the sun gear 1042, and a planet carrier 1044 rotatably connected to the plurality of planet gears 1043. The planet carrier 1044 serves as the first input end of the power split mechanism 104 connected to the engine 101. The sun gear 1042 serves as the second input end of the power split mechanism 104 connected to the first electric machine 103. The ring gear 1041 serves as the output end of the power split mechanism 104 connected to the transmission input shaft 107. The first synchronizer 105 is disposed between the planet carrier 1044 and the ring gear 1041.

It should be noted that in the power split mode, the first synchronizer 105 is in the power split gear. At this time, the planet carrier 1044 and the ring gear 1041 are in a disengaged state. A driving force output by the engine 101 is transmitted to the planet carrier 1044 via the clutch 102. The planet carrier 1044 transmits a part of the driving force to the first electric machine 103 sequentially through the plurality of planet gears 1043 and the sun gear 1042, so as to drive the first electric machine 103 to generate power for the traction battery. At the same time, the planet carrier 1044 transmits another part of the driving force to the front axle of the vehicle sequentially through the plurality of planet gears 1043, the ring gear 1041, the transmission input shaft 107, the second synchronizer 106, the transmission output shaft 108, and the front axle differential 109, so as to drive the vehicle.

In the direct drive mode, the first synchronizer 105 is in the engaged gear. At this time, the planet carrier 1044 and the ring gear 1041 are in a locked state. A driving force output by the engine 101 is transmitted to the transmission input shaft 107 sequentially through the planet carrier 1044, the first synchronizer 105, and the ring gear 1041. While a driving force output by the first electric machine 103 is transmitted to the transmission input shaft 107 through the sun gear 1042, the plurality of planet gears 1043, and the ring gear 1041. That is, the engine 101 and the first electric machine 103 transmit driving forces to the transmission input shaft 107 through two different power paths. Then the driving forces are transmitted from the transmission input shaft 107 to the front axle of the vehicle sequentially through the second synchronizer 106, the transmission output shaft 108, and the front axle differential 109 to drive the vehicle.

Based on the above structure, the step of performing torque adjustment on the engine 101 based on the current electric machine torque in S202-1 may specifically include the following sub-steps.

S202-1-1: when a current gear of the first synchronizer 105 is the engaged gear, determining a gear ratio between the sun gear 1042 and the planet carrier 1044 as a first gear ratio.

It should be noted that the planet carrier 1044 and the ring gear 1041 have different gear ratios when the first synchronizer 105 is in different gears. The sun gear 1042 has the same rotational speed as the first electric machine 103, and the planet carrier 1044 has the same rotational speed as the engine 101. Therefore, based on the current gear of the first synchronizer 105, the gear ratio between the first electric machine 103 and the engine 101 can be determined.

In the embodiment, since before gear shifting, the current gear of the first synchronizer 105 is the engaged gear, the HCU can determine the gear ratio between the sun gear 1042 and the planet carrier 1044 as the first gear ratio.

S202-1-2: determining a target engine torque of the engine 101 based on the current electric machine torque of the first electric machine 103 and the first gear ratio.

In the embodiment, since rotational speed and torque are inversely proportional, the HCU can keep the current torque of the first electric machine 103 unchanged. Based on the first gear ratio and the current electric machine torque of the first electric machine 103, the HCU can back-calculate the target engine torque of the engine 101.

S202-1-3: controlling, based on a preset torque adjustment gradient, the current engine torque of the engine 101 to gradually decrease to the target engine torque.

In the embodiment, after the target engine torque is determined, the HCU can activate a torque control mode of the engine controller, so that the engine controller adjusts the current engine torque of the engine 101 to the target engine torque.

In specific implementation, the current engine torque of the engine 101 can be controlled to follow the target engine torque according to a preset torque adjustment gradient. The torque adjustment gradient represents an amount of change in torque per unit time. For example, the torque adjustment gradient can be set to 200 N•m/s.

In the embodiment, by performing torque adjustment on the engine 101 according to the torque adjustment gradient, an excessive torque change that affects driving smoothness of the vehicle can be avoided.

In a feasible implementation, the step of controlling the current engine torque of the engine 101 and the current electric machine torque of the first electric machine 103 to follow the preset target torque in S202-2 may specifically include the following sub-step.

S202-2-1: controlling, based on a preset torque adjustment gradient, the current engine torque of the engine 101 and the current electric machine torque of the first electric machine 103 to gradually decrease to the target torque.

It should be noted that the target torque represents a torque at which the first synchronizer 105 can be disengaged from the engaged gear to the power split gear. Specifically, the target torque can be set according to an actual gear shifting requirement. For example, to maximize a service life of the first synchronizer 105, the target torque can be set to zero. For example, to maximize a gear shifting speed, the target torque can be set to a maximum torque that allows disengagement. For example, the target torque can be set to a value between zero and the maximum torque, thereby improving gear shifting speed to a certain extent while the service life of the first synchronizer 105 is ensured.

In the embodiment, after the target torque is determined, the HCU can activate a torque control mode of the electric machine controller, so that the electric machine controller adjusts the current electric machine torque of the first electric machine 103 to the target torque. At the same time, the HCU can further activate a torque control mode of the engine controller, so that the engine controller adjusts the current engine torque of the engine 101 to the target torque.

In specific implementation, the current engine torque of the engine 101 and the current electric machine torque of the first electric machine 103 can gradually reach the target torque according to the preset torque adjustment gradient.

In the embodiment, by performing torque adjustment on the engine 101 and the first electric machine 103 according to the torque adjustment gradient, a drastic torque change that affects the driving smoothness of the vehicle can be avoided.

Exemplarily, after the step of performing torque adjustment on the engine 101 based on the current electric machine torque, the vehicle mode switching method may further include the following steps.

S301: when a first torque difference between the current engine torque of the engine 101 and the target engine torque is less than a first torque threshold, starting to count a first duration during which the first torque difference remains less than the first torque threshold.

It should be noted that when the current electric machine torque of the first electric machine 103 is a negative torque, that is, when the first electric machine 103 is in the power generating state, only the torque of the engine 101 needs to be adjusted.

In the embodiment, during a process of adjusting the torque of the engine 101, the HCU can acquire the current engine torque fed back in real time by the engine controller. When the first torque difference between the current engine torque and the target engine torque is detected to be less than the first torque threshold, a first timer is triggered to accumulate timing for the first duration, thereby determining whether the engine 101 is stably operating near the target engine torque based on the first duration. The first torque threshold can be set to 5 N•m. The first duration represents a duration during which the engine 101 continuously operates stably near the target engine torque.

S302: when the first duration is greater than a first time threshold, determining that the first synchronizer 105 satisfies the gear shift condition.

In the embodiment, if the HCU detects that the first duration is greater than the first time threshold, the engine 101 is considered to be stably operating near the target engine torque, with a small torque fluctuation amplitude, and then the first synchronizer 105 is determined to satisfy the gear shift condition.

In the embodiment, by monitoring the first duration, when the engine 101 has abnormal torque fluctuations, controlling the first synchronizer 105 to perform a disengagement operation can be effectively avoided, thereby ensuring that the first synchronizer 105 can shift smoothly.

In a feasible implementation, after the step of controlling the current engine torque of the engine 101 and the current electric machine torque of the first electric machine 103 to follow the preset target torque, the vehicle mode switching method may further include the following steps.

S401: when a second torque difference between the current engine torque of the engine 101 and the target torque is less than a second torque threshold, starting to count a second duration during which the second torque difference remains less than the second torque threshold.

It should be noted that when the current electric machine torque of the first electric machine 103 is a positive torque, that is, when the first electric machine 103 is in the driving state, it is necessary to simultaneously control the engine 101 and the first electric machine 103 to reduce the torque to the target torque.

In the embodiment, during a process of adjusting the torque of the engine 101, the HCU can acquire a current engine torque fed back in real time by the engine controller. When the second torque difference between the current engine torque and the target torque is detected to be less than the second torque threshold, a second timer is triggered to accumulate timing for the second duration, thereby determining whether the engine 101 is stably operating near the target torque based on the second duration.

S402: when a third torque difference between the current electric machine torque of the first electric machine 103 and the target torque is less than a third torque threshold, startingto count a third duration during which the third torque difference remains less than the third torque threshold.

In the embodiment, during a process of adjusting the torque of the first electric machine 103, the HCU can acquire a current electric machine torque of the first electric machine 103 fed back in real time by the electric machine controller. When the third torque difference between the current electric machine torque and the target torque is detected to be less than the third torque threshold, a third timer is triggered to accumulate timing for the third duration, thereby determining whether the first electric machine 103 is stably operating near the target torque based on the third duration.

S403: when the second duration is greater than a second time threshold and the third duration is greater than a third time threshold, determining that the first synchronizer 105 satisfies the gear shift condition.

In the embodiment, if the HCU detects that both the second duration and the third duration are greater than their respective time thresholds, the engine 101 and the first electric machine 103 are considered to be both stably operating near the target torque, and then the first synchronizer 105 is determined to have satisfied the gear shift condition.

In the embodiment, by monitoring the second duration and the third duration, when the engine 101 or the first electric machine 103 has abnormal torque fluctuations, controlling the first synchronizer 105 to perform a disengagement operation can be effectively avoided, thereby ensuring that the first synchronizer 105 can shift smoothly.

Exemplarily, the vehicle further includes a second electric machine, and the vehicle mode switching method may further include the following steps.

S501: determining a compensation torque of the second electric machine based on the current engine torque and an original electric machine torque.

In the embodiment, considering that regardless of whether the first electric machine 103 is in the driving state or the power generating state, a front axle torque continuously decreases during the torque adjustment process on the engine 101 and the first electric machine 103. To ensure a power demand of the vehicle during mode switching, torque compensation can be provided through the second electric machine.

In specific implementation, the sum of the current engine torque and the current electric machine torque can be determined as the compensation torque of the second electric machine. It should be noted that the current engine torque represents an engine torque before torque adjustment on the engine 101 and the first electric machine 103; the current electric machine torque represents an electric machine torque before torque adjustment on the engine 101 and the first electric machine 103.

For example, when the vehicle is determined to satisfy the mode switching condition, if the HCU detects that the current engine torque is 800 N•m and the current electric machine torque is -300 N•m, the compensation torque of the second electric machine is 500 N•m.

In another example, when the vehicle is determined to satisfy the mode switching condition, if the HCU detects that the current engine torque is 400 N•m and the current electric machine torque is 200 N•m, the compensation torque of the second electric machine is 600 N•m.

S502: determining a target drive torque of the second electric machine based on the compensation torque and an original drive torque of the second electric machine.

In the embodiment, the HCU can further superimpose a compensation torque on the current drive torque of the second electric machine to obtain the target drive torque of the second electric machine, so that the second electric machine can supplement, at the rear axle of the vehicle, a torque that is reduced at the front axle of the vehicle.

S503: during the torque adjustment on the engine 101 and the first electric machine 103, controlling, based on a torque adjustment gradient, the current drive torque of the second electric machine to gradually increase to the target drive torque.

In the embodiment, during a process of adjusting the torque of the engine 101 and the first electric machine 103 according to the torque adjustment gradient, the HCU can synchronously control the second electric machine to perform torque compensation according to the same torque adjustment gradient.

In one example, the torque adjustment gradient is set to 200 N•m/s. When the vehicle is determined to satisfy the mode switching condition, if the HCU detects that the torque output by the engine 101 is 800 N•m, an original electric machine torque output by the first electric machine 103 is -300 N•m, and an original drive torque output by the second electric machine is 400 N•m, the HCU can keep the first electric machine 103 outputting -300 N•m, and control the engine 101 to gradually decrease from 800 N•m to 300 N•m according to a torque adjustment gradient of 200 N•m/s. At the same time, the compensation torque of the second electric machine is calculated as 500 N•m, the target drive torque is calculated as 900 N•m, and then the second electric machine is synchronously controlled to gradually increase from 400 N•m to 900 N•m according to the torque adjustment gradient of 200 N•m/s.

In another example, the torque adjustment gradient is set to 200 N•m/s, and the target torque is set to 0 N•m. If the HCU detects that the engine 101 is outputting 400 N•m, the first electric machine 103 is outputting 200 N•m, and the second electric machine is outputting 400 N•m, then after the vehicle is detected to satisfy the mode switching condition, the HCU can control the engine 101 to gradually decrease from 800 N•m to 0 N•m according to a torque adjustment gradient of 200 N•m/s, and control the first electric machine 103 to gradually increase from -300 N•m to 0 N•m. At the same time, the compensation torque of the second electric machine is calculated as 600 N•m, the target drive torque is calculated as 1000 N•m, and then the second electric machine is synchronously controlled to gradually increase from 400 N•m to 1000 N•m according to the torque adjustment gradient of 200 N•m/s.

In the embodiment, by performing torque compensation through the second electric machine, the overall vehicle power performance can be maintained regardless of whether the first electric machine 103 is in the power generating state or the driving state during mode switching, thereby effectively meeting the power demand of the driver during mode switching while unintended deceleration or surging of the vehicle is avoided.

In a second aspect, based on the same inventive concept, referring to FIG. 3, an embodiment of the present application provides a vehicle mode switching apparatus 300. The vehicle includes an engine 101, a clutch 102, a first electric machine 103, and a transmission. The transmission includes a power split mechanism 104, a transmission input shaft 107, a transmission output shaft 108, a first synchronizer 105, and a second synchronizer 106. The engine 101 is connected to a first input end of the power split mechanism 104 via the clutch 102. The first electric machine 103 is connected to a second input end of the power split mechanism 104. An output end of the power split mechanism 104 is connected to the transmission input shaft 107. The second synchronizer 106 is disposed between the transmission input shaft 107 and the transmission output shaft 108. The first synchronizer 105 is disposed between the first input end and the output end. The vehicle mode switching apparatus 300 includes:
a condition determination module 301, configured to, when the vehicle is in a direct drive mode, determine, based on operating condition information of the vehicle, whether the vehicle satisfies a mode switching condition for switching from a series mode to a power split mode;
a torque adjustment module 302, configured to, when the vehicle is determined to satisfy the mode switching condition, maintain the clutch 102 in an engaged state, and perform torque adjustment on the engine 101 and the first electric machine 103, so that the first synchronizer 105 satisfies a gear shift condition;
a gear shift module 303, configured to, when the first synchronizer 105 satisfies the gear shift condition, control the first synchronizer 105 to shift from an engaged gear to a power split gear, so that the vehicle switches from the direct drive mode to the power split mode.

In an embodiment of the present application, the operating condition information includes road condition information and a current state of charge of a traction battery. The condition determination module 301 includes:
a road condition determination submodule, configured to, when the current state of charge is less than a charge threshold, determine, based on the road condition information, a current road condition in which the vehicle is located; and
a condition determination submodule, configured to, when the current road condition is a preset road condition, determine that the vehicle satisfies the mode switching condition for switching from the direct drive mode to the power split mode.

In an embodiment of the present application, the torque adjustment module 302 includes:
a first torque adjustment submodule, configured to, when a current electric machine torque of the first electric machine 103 is a negative torque, keep the current electric machine torque unchanged, and perform torque adjustment on the engine 101 based on the current electric machine torque; and
a second torque adjustment submodule, configured to, when the current electric machine torque of the first electric machine 103 is a positive torque, control a current engine torque of the engine 101 and the current electric machine torque of the first electric machine 103 to follow a preset target torque.

In an embodiment of the present application, the power split mechanism 104 includes a ring gear 1041, a sun gear 1042, a plurality of planet gears 1043 meshed with the ring gear 1041 and the sun gear 1042, and a planet carrier 1044 rotatably connected to the plurality of planet gears 1043. The planet carrier 1044 serves as the first input end connected to the engine 101. The sun gear 1042 serves as the second input end connected to the first electric machine. The ring gear 1041 serves as the output end connected to the transmission input shaft 107. The first synchronizer 105 is disposed between the planet carrier 1044 and the ring gear 1041. The first torque adjustment submodule includes:
a gear ratio determination unit, configured to, when a current gear of the first synchronizer 105 is the engaged gear, determine a gear ratio between the sun gear 1042 and the planet carrier 1044 as a first gear ratio;
an engine torque determination unit, configured to determine a target engine torque of the engine 101 based on the current electric machine torque of the first electric machine 103 and the first gear ratio; and
a first torque adjustment unit, configured to control, based on a preset torque adjustment gradient, the current engine torque of the engine 101 to gradually decrease to the target engine torque.

In some embodiments of the present application, the second torque adjustment submodule includes:
a second torque adjustment unit, configured to control, based on a preset torque adjustment gradient, the current engine torque of the engine 101 and the current electric machine torque of the first electric machine 103 to gradually decrease to the target torque.

In some embodiments of the present application, the vehicle further includes a second electric machine. The vehicle mode switching apparatus further includes:
a compensation torque determination module, configured to determine a compensation torque of the second electric machine based on the current engine torque and an original electric machine torque;
a drive torque determination module, configured to determine a target drive torque of the second electric machine based on the compensation torque and an original drive torque of the second electric machine; and
a drive torque control module, configured to, during the torque adjustment on the engine 101 and the first electric machine 103, control, based on a preset torque adjustment gradient, the current drive torque of the second electric machine to gradually increase to the target drive torque.

In an embodiment of the present application, the vehicle mode switching apparatus 300 further includes:
a first timing module, configured to, when a first torque difference between the current engine torque of the engine 101 and the target engine torque is less than a first torque threshold, start to count a first duration during which the first torque difference remains less than the first torque threshold; and
a first shift condition determination module, configured to, when the first duration is greater than a first time threshold, determine that the first synchronizer 105 satisfies a first gear shift condition.

In an embodiment of the present application, the speed adjustment module 300 includes:
a second timing module, configured to, when a second torque difference between the current engine torque of the engine 101 and the target torque is less than a second torque threshold, start to count a second duration during which the second torque difference remains less than the second torque threshold;
a third timing module, configured to, when a third torque difference between the current electric machine torque of the first electric machine 103 and the target torque is less than a third torque threshold, start to count a third duration during which the third torque difference remains less than the third torque threshold; and
a second shift condition determination module, configured to, when the second duration is greater than a second time threshold and the third duration is greater than a third time threshold, determine that the first synchronizer 105 satisfies the gear shift condition.

It should be noted that the specific implementation of the vehicle mode switching apparatus 300 according to the embodiment of the present application refers to the specific implementation of the vehicle mode switching method according to the first aspect of the embodiment of the present application, and is not repeated here.

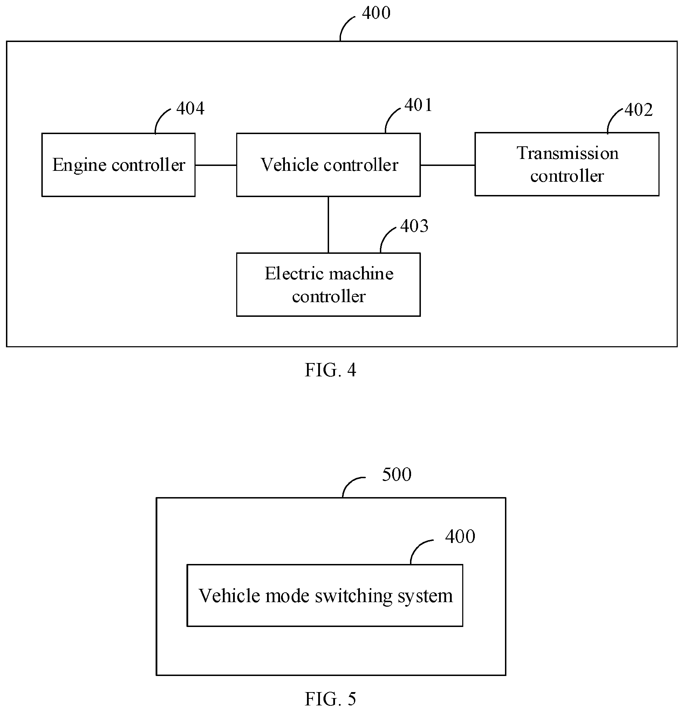

In a third aspect, based on the same inventive concept, referring to FIG. 4, an embodiment of the present application provides a vehicle mode switching system 400. The vehicle includes an engine 101, a clutch 102, a first electric machine, and a transmission. The transmission includes a power split mechanism 104, a transmission input shaft 107, and a first synchronizer 105. The engine 101 is connected to a first input end of the power split mechanism 104 via the clutch 102. The first electric machine 103 is connected to a second input end of the power split mechanism 104. An output end of the power split mechanism 104 is connected to the transmission input shaft 107. The first synchronizer 105 is disposed between the first input end and the output end. The vehicle mode switching system 400 includes a vehicle controller 401, a transmission controller 402, an electric machine controller 403, and an engine controller 404.

The vehicle controller 401 is configured to, when the vehicle is in a direct drive mode, determine, based on operating condition information of the vehicle, whether the vehicle satisfies a mode switching condition for switching from a series mode to a power split mode; and when the vehicle is determined to satisfy the mode switching condition, send a clutch state maintaining request to the transmission controller 402, send an engine torque adjustment request to the engine controller 404, and send an electric machine torque adjustment request to the electric machine controller 403.

The transmission controller 402 is configured to, in response to the clutch state maintaining request, maintain the clutch 102 in an engaged state.

The engine controller 404 is configured to, in response to the engine torque adjustment request, perform torque adjustment on the engine 101. The electric machine controller 403 is configured to, in response to the electric machine torque adjustment request, perform torque adjustment on the first electric machine 103, so that the first synchronizer 105 satisfies a gear shift condition for a power generating state.

The vehicle controller 401 is further configured to, when the first synchronizer 105 satisfies the gear shift condition, send a gear shift request to the transmission controller 402.

The transmission controller 402 is further configured to, in response to the gear shift request, control the first synchronizer 105 to shift from an engaged gear to a power split gear, so that the vehicle switches from the direct drive mode to the power split mode.

It should be noted that the specific implementation of the vehicle mode switching system 400 according to the embodiment of the present application refers to the specific implementation of the vehicle mode switching method according to the first aspect of the present application, and is not repeated here.

In a fourth aspect, based on the same inventive concept, referring to FIG. 5, an embodiment of the present application provides a vehicle 500. The vehicle 500 includes the vehicle mode switching system 400 according to the third aspect of the present application.

It should be noted that the specific implementation of the vehicle 500 according to the embodiment of the present application refers to the specific implementation of the vehicle mode switching system 400 according to the third aspect of the embodiment of the present application, and is not repeated here.

Various component embodiments of the present invention may be implemented in hardware, or in software modules running on one or more processors, or in a combination thereof. It is appreciated by those skilled in the art that some or all of the functions of some or all of the components of a computing processing device according to an embodiment of the present invention may be implemented in practice using a microprocessor or a digital signal processor (DSP). The present invention may further be embodied as an apparatus or device program (for example, a computer program and a computer program product) for performing some or all of the methods described herein. Such a program embodying the invention may be stored on a computer-readable medium or may be in the form of one or more signals. Such signals may be downloaded from an Internet website, provided on a carrier signal, or provided in any other form.

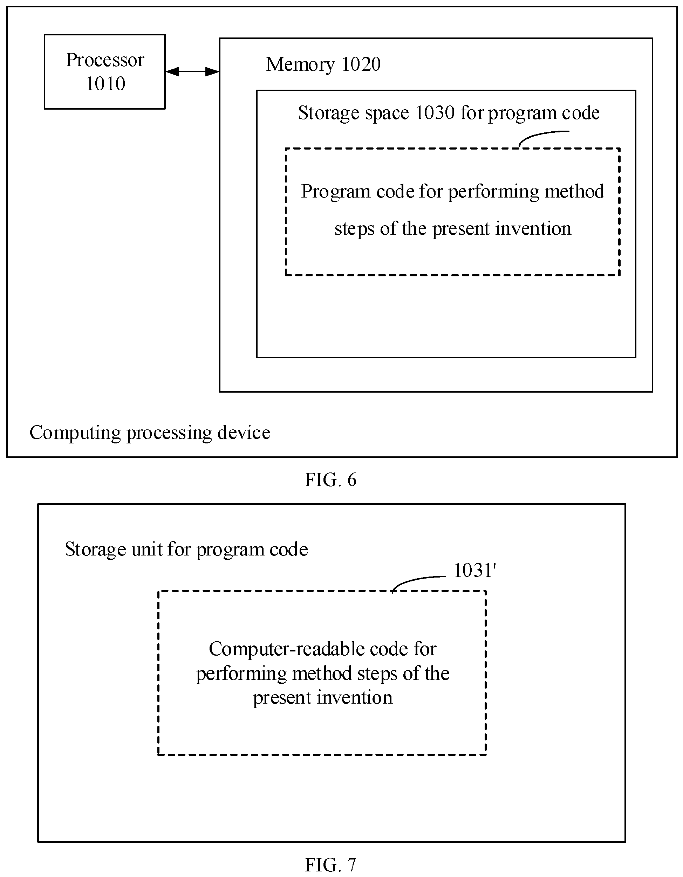

For example, FIG. 6 shows a computing processing device that can implement the method according to the present invention. The computing processing device conventionally includes a processor 1010 and a memory 1020 in the form of a computer program product or computer-readable medium. The memory 1020 may be an electronic memory such as a flash memory, an electrically erasable programmable read-only memory (EEPROM), an erasable programmable read-only memory (EPROM), a hard disk, or a read-only memory (ROM). The memory 1020 has a storage space 1030 for program code 1031 for performing any of the method steps described above. For example, the storage space 1030 for program code may include respective program code 1031 for implementing the various steps in the above method, respectively. These program code may be read from or written to one or more computer program products. These computer program product include a program code carrier such as a hard disk, a compact disk (CD), a memory card, or a floppy disk. Such computer program product is generally a portable or fixed storage unit as shown with reference to FIG. 7. The storage unit may have a storage segment, a storage space, and the like, arranged similarly to the memory 1020 in the computing processing device of FIG. XXX. The program code may be compressed, for example, in an appropriate form. Generally, the storage unit includes computer readable code 1031', that is, code readable by a processor such as 1010. When the computer-readable code 1031' are executed on a computing processing device, the computing processing device is caused to perform the various steps of the method described above.

Although preferred embodiments of the present application have been described, those skilled in the art, once they know the basic inventive concept, can make additional changes and modifications to these embodiments. Therefore, the appended claims are intended to be interpreted as including the preferred embodiments and all changes and modifications that fall within the scope of the embodiments of the present application.

Finally, it should further be noted that, herein, relational terms such as first and second, are used merely to distinguish one entity or operation from another, and do not necessarily require or imply any such actual relationship or order between these entities or operations. Moreover, the terms "comprise", "include", or any other variation thereof are intended to cover a non-exclusive inclusion, such that a process, method, article, or terminal device that comprises a list of elements includes not only those elements but also other elements not expressly listed, or further includes elements inherent to such process, method, article, or terminal device. Without further limitation, an element defined by the phrase "comprising a ..." does not preclude the presence of additional identical elements in the process, method, article, or terminal device that comprises the element.

## Claims

1. A vehicle mode switching method, wherein the vehicle comprises an engine, a clutch, a first electric machine, and a transmission; the transmission comprises a power split mechanism, a first synchronizer, and a transmission input shaft; the engine is connected to a first input end of the power split mechanism via the clutch; the first electric machine is connected to a second input end of the power split mechanism; an output end of the power split mechanism is connected to the transmission input shaft; the first synchronizer is disposed between the first input end and the output end; and the method comprises:
when the vehicle is in a direct drive mode, determining, based on operating condition information of the vehicle, whether the vehicle satisfies a mode switching condition for switching from the direct drive mode to a power split mode;
when the vehicle is determined to satisfy the mode switching condition, maintaining the clutch in an engaged state, and performing torque adjustment on the engine and the first electric machine, so that the first synchronizer satisfies a gear shift condition; and
when the first synchronizer satisfies the gear shift condition, controlling the first synchronizer to shift from an engaged gear to a power split gear, so that the vehicle switches from the direct drive mode to the power split mode.

2. The vehicle mode switching method according to claim 1, wherein the operating condition information comprises road condition information and a current state of charge of a traction battery;
the step of determining, based on the operating condition information of the vehicle, whether the vehicle satisfies the mode switching condition for switching from the direct drive mode to the power split mode comprises:
when the current state of charge is less than a charge threshold, determining, based on the road condition information, a current road condition in which the vehicle is located; and
when the current road condition is a preset road condition, determining that the vehicle satisfies the mode switching condition for switching from the direct drive mode to the power split mode.

3. The vehicle mode switching method according to claim 1, wherein the step of performing torque adjustment on the engine and the first electric machine comprises:
when a current electric machine torque of the first electric machine is a negative torque, keeping the current electric machine torque unchanged, and performing torque adjustment on the engine based on the current electric machine torque; and
when the current electric machine torque of the first electric machine is a positive torque, controlling a current engine torque of the engine and the current electric machine torque of the first electric machine to follow a preset target torque.

4. The vehicle mode switching method according to claim 3, wherein the power split mechanism comprises a ring gear, a sun gear, a plurality of planet gears meshed with the ring gear and the sun gear, and a planet carrier rotatably connected to the plurality of planet gears; the planet carrier serves as the first input end connected to the engine; the sun gear serves as the second input end connected to the first electric machine; the ring gear serves as the output end connected to the transmission input shaft; the first synchronizer is disposed between the planet carrier and the ring gear; and
the step of performing torque adjustment on the engine based on the current electric machine torque comprises:
when a current gear of the first synchronizer is the engaged gear, determining a gear ratio between the sun gear and the planet carrier as a first gear ratio;
determining a target engine torque of the engine based on the current electric machine torque of the first electric machine and the first gear ratio; and
controlling, based on a preset torque adjustment gradient, the current engine torque of the engine to gradually decrease to the target engine torque.

5. The vehicle mode switching method according to claim 3, wherein the step of controlling the current engine torque of the engine and the current electric machine torque of the first electric machine to follow the preset target torque comprises:
controlling, based on a preset torque adjustment gradient, the current engine torque of the engine and the current electric machine torque of the first electric machine to gradually decrease to the target torque.

6. The vehicle mode switching method according to claim 4, wherein after the step of performing torque adjustment on the engine based on the current electric machine torque, the method further comprises:
when a first torque difference between the current engine torque of the engine and the target engine torque is less than a first torque threshold, starting to count a first duration during which the first torque difference remains less than the first torque threshold; and
when the first duration is greater than a first time threshold, determining that the first synchronizer satisfies the gear shift condition.

7. The vehicle mode switching method according to claim 3, wherein after the step of controlling the current engine torque of the engine and the current electric machine torque of the first electric machine to follow the preset target torque, the method further comprises:
when a second torque difference between the current engine torque of the engine and the target torque is less than a second torque threshold, starting to count a second duration during which the second torque difference remains less than the second torque threshold;
when a third torque difference between the current electric machine torque of the first electric machine and the target torque is less than a third torque threshold, starting to count a third duration during which the third torque difference remains less than the third torque threshold; and
when the second duration is greater than a second time threshold and the third duration is greater than a third time threshold, determining that the first synchronizer satisfies the gear shift condition.

8. The vehicle mode switching method according to claim 3, wherein the vehicle further comprises a second electric machine, and the method further comprises:
determining a compensation torque of the second electric machine based on the current engine torque and the current electric machine torque;
determining a target drive torque of the second electric machine based on the compensation torque and a current drive torque of the second electric machine; and
during the torque adjustment on the engine and the first electric machine, controlling, based on a preset torque adjustment gradient, the current drive torque of the second electric machine to gradually increase to the target drive torque.

9. A vehicle mode switching apparatus, wherein the vehicle comprises an engine, a clutch, a first electric machine, and a transmission; the transmission comprises a power split mechanism, a first synchronizer, and a transmission input shaft; the engine is connected to a first input end of the power split mechanism via the clutch; the first electric machine is connected to a second input end of the power split mechanism; an output end of the power split mechanism is connected to the transmission input shaft; the first synchronizer is disposed between the first input end and the output end; and the apparatus comprises:
a condition determination module, configured to, when the vehicle is in a direct drive mode, determine, based on operating condition information of the vehicle, whether the vehicle satisfies a mode switching condition for switching from the direct drive mode to a power split mode;
a torque adjustment module, configured to, when the vehicle is determined to satisfy the mode switching condition, maintain the clutch in an engaged state, and perform torque adjustment on the engine and the first electric machine, so that the first synchronizer satisfies a gear shift condition; and
a gear shift module, configured to, when the first synchronizer satisfies the gear shift condition, control the first synchronizer to shift from an engaged gear to a power split gear, so that the vehicle switches from the direct drive mode to the power split mode.
In some embodiments of the present application,the operating condition information comprises road condition information and a current state of charge of a traction battery; and the condition determination module comprises:
a road condition determination submodule, configured to, when the current state of charge is less than a charge threshold, determine, based on the road condition information, a current road condition in which the vehicle is located; and
a condition determination submodule, configured to, when the current road condition is a preset road condition, determine that the vehicle satisfies the mode switching condition for switching from the direct drive mode to the power split mode.

10. A vehicle mode switching system, wherein the vehicle comprises an engine, a clutch, a first electric machine, and a transmission; the transmission comprises a power split mechanism, a first synchronizer, and a transmission input shaft; the engine is connected to a first input end of the power split mechanism via the clutch; the first electric machine is connected to a second input end of the power split mechanism; an output end of the power split mechanism is connected to the transmission input shaft; the first synchronizer is disposed between the first input end and the output end; and the system comprises a vehicle controller, a transmission controller, an electric machine controller, and an engine controller; wherein
the vehicle controller is configured to, when the vehicle is in a direct drive mode, determine, based on operating condition information of the vehicle, whether the vehicle satisfies a mode switching condition for switching from the direct drive mode to a power split mode, and when the vehicle is determined to satisfy the mode switching condition, send a clutch state maintaining request to the transmission controller, send an engine torque adjustment request to the engine controller, and send an electric machine torque adjustment request to the electric machine controller;
the transmission controller is configured to, in response to the clutch state maintaining request, maintain the clutch in an engaged state;
the engine controller is configured to, in response to the engine torque adjustment request, perform torque adjustment on the engine, and the electric machine controller is configured to, in response to the electric machine torque adjustment request, perform torque adjustment on the first electric machine, so that the first synchronizer satisfies a gear shift condition;
the vehicle controller is further configured to, when the first synchronizer satisfies the gear shift condition, send a gear shift request to the transmission controller; and
the transmission controller is further configured to, in response to the gear shift request, control the first synchronizer to shift from an engaged gear to a power split gear, so that the vehicle switches from the direct drive mode to the power split mode.

11. A vehicle, comprising the vehicle mode switching system according to claim 10.

12. A computer program, comprising computer-readable code, wherein when the computer-readable code is executed on a computing processing device, the computing processing device is caused to perform the vehicle mode switching method according to any one of claims 1-8.

13. A computer-readable medium, storing the computer program according to claim 12.
